(19) Europäisches Patentamt
European Patent Office
Office européen des brevets

(11) **EP 1 763 268 B1**

(12) **EUROPEAN PATENT SPECIFICATION**

(45) Date of publication and mention
of the grant of the patent:
**12.08.2009 Bulletin 2009/33**

(51) Int Cl.:
**H04W 72/08** (2009.01)

(21) Application number: **05019885.2**

(22) Date of filing: **13.09.2005**

(54) **Dynamic sub-channel allocation in a OFDM/TDMA TDD communication system**

Dynamische Unterkanalzuweisung in einem OFDM/TDMA TDD Kommunikationssystem

Attribution dynamique de sous-canaux dans un système de communication OFDM/TDMA TDD

(84) Designated Contracting States:
**DE GB**

(43) Date of publication of application:
**14.03.2007 Bulletin 2007/11**

(73) Proprietor: **NTT DoCoMo, Inc.**
**Tokyo (JP)**

(72) Inventors:
• **Nguyen, Van Duc**
**28757 Bremen (DE)**
• **Omiyi, Peter**
**28759 Bremen (DE)**
• **Haas, Harald**
**28755 Bremen (DE)**
• **Auer, Gunther**
**80339 München (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**EP-A- 1 257 098          EP-A- 1 526 685**
**US-A1- 2004 125 743**

• OMIYI P E ET AL: "Improving time-slot allocation in 4th generation OFDM/TDMA TDD radio access networks with innovative channel-sensing" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 3133-3137, XP010709781 ISBN: 0-7803-8533-0
• OMIYI P E ET AL: "Maximising spectral efficiency in 4th generation OFDM/TDMA TDD hybrid cellular mobile/ad-hoc wireless communications" VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 4, 17 May 2004 (2004-05-17), pages 2052-2056, XP010766523 ISBN: 0-7803-8255-2
• OMIYI P E ET AL: "Maximising Spectral Efficiency in 3G with Hybrid Ad-Hoc UTRA TDD/UTRA FDD Cellular Mobile Communications" SPREAD SPECTRUM TECHNIQUES AND APPLICATIONS, 2004 IEEE EIGHTH INTERNATIONAL SYMPOSIUM ON SYDNEY, AUSTRALIA 30 AUG.-2 SEPT. 2004, PISCATAWAY, NJ, USA,IEEE, 30 August 2004 (2004-08-30), pages 613-617, XP010755107 ISBN: 0-7803-8408-3

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is in the field of dynamic frequency sub-channel allocation and medium access control (MAC), for example for multi user access in cellular, ad hoc and multi-hop based networks.

Unlike spread spectrum techniques OFDM (Orthogonal Frequency Division Multiplexing) does not have an in-built interference resistance mechanism which would enable OFDM to be used in multiple cell environments such that a full frequency or sub-channel reuse would be possible. Therefore, the issue of an intelligent sub-channel reuse scheme in order to effectively combat co-channel interference (CCI) is an open problem. In addition, in ad hoc or multi-hop networks the lack of central radio resource management or sub-channel management control adds a further complication.

Several approaches exist which aim at addressing the problem stated above.

First, the use of the cellular concept in which the entire radio frequency band is subdivided into sub-bands each of which is used in different cells according to a particular frequency reuse pattern. For broadband wireless access, which relies on large bandwidth, this solution which originally is tailored for low rate circuit switched services is an infeasible or at least a highly inefficient solution.

Second, the use of sub-channel (frequency) hopping, but this lacks the systematic exploitation of available resources. As a consequence this approach only works well in low load situations. The main advantage is the reduction in complexity as only little coordination (signalling overhead) is required.

Third, the use of channel sensing or random MAC protocols such as CSMA-CA (Carrier Sensing Multiple Access - Collision Avoidance). Most of the state-of-the-art protocols result in poor spectrum efficiency, and/or in a large signalling overhead.

P. Omiyi and H. Haas showed in "Improving Time-Slot Allocation in 4th Generation OFDM/TDMA TDD Radio Access Networks with Innovative Channel-Sensing" in Proceedings of the International Conference on Communications ICC '04, vol. 6, Paris, France: IEEE, June 20-24 2004, pp. 3133 - 3137, in the following [1], that a new MAC protocol tailored for a TDD based air-interface using busy-tone in combination with mini-slots can achieve high spectrum efficiency in single carrier transmission.

The patent application PCT/EP 2004/011840, "Communications Network Using Reservation Indicator" or WO 2005 041494 or EP 1 526 685 "Inter-Cell Interference Mitigation Technique Using Reservation Indicators", by Haas, Harald and Omiyi, Peter is based on the afore mentioned approach. This approach or protocol, however, does not cater for the frequency selectivity observed in broadband wireless access.

OMIYI P E ET AL: describe in "Improving time-slot allocation in 4th generation OFDM/TDMA TDD radio networks with innovative channel-sensing" COMMUNICATIONS, 2004 IEEE INTERNATIONAL CONFERENCE ON PARIS; FRANCE 20-24 JUNE 2004, PISCATAWAY, NJ; USA, IEEE, 20 June 2004 (2004-06-20), pages 3133-3137, XP010709781 ISBN 0-7803-8533-0) a strategy for mitigating high intercellular interference in a fourth generation OFDM/TDMA TDD cellular mobile communications network with 100% frequency re-use. The strategy is denoted as channel-sensing TDMA TDD and employs a modified busy-tone broadcast/channel-sensing mechanism to avoid and mitigate high inter cellular interference scenarios. Within the strategy described a busy-tone is only detected when the product of the received busy-tone power $P_{RB}$ and the intended data transmit power $P_{TD}$ divided by the fixed, known busy-tone transmit power $P_{TB}$ is equal or greater than an interference threshold I threshold.

OMIYI P E ET AL: describe in "Maximising spectral efficiency in 4th generation OFDM/TDMA TDD hybrid cellular mobile/ad-hoc wireless communications" VEHICULAR TECHNOLOGY CONFERENCE, 2004. VTC 2004-SPRING. 2004, IEEE MILAN, ITALY 17-19 MAY 2004, PISCATAWAY, NJ; USA, IEEE, US, vol. 4, 17 May 2004 (2004-05-17, pages 2052-2056, XP010766523 ISBN: 0-7803-8255-2), in "Maximising Spectral Efficiency in 3G with Hybrid Ad-Hoc UTRA TDD/UTRA FDD Cellular Mobile Communications" SPREAD SPECTRUM TECHNIQUES AND APPLICATIONS, 2004 IEEE EIGHTH INTERNATIONAL SYMPOSIUM ON SYDNEY, AUSTRALIA, 30 August 2004 (2004-08-30), pages 613-617, XP010755107 ISBN: 0-7803-9408-3) and in EP 1 526 685 A the same strategy as disclosed by the publication mentioned in the preceding paragraph.

It is the object of the present invention to provide an improved concept for a dynamic sub-channel allocation for broadband wireless access systems.

This object is achieved by a method for dynamic sub-channel allocation according to claim 1, a computer program according to claim 11, a transmitter according to claim 12, a receiver according to claim 13 and a system for dynamic sub-channel allocation according to claim 14.

The present invention is based on the finding that an improvement of the dynamic sub-channel allocation can be achieved by dividing the communication channel into a plurality of sub-channels. Smaller sub-channels are less frequency selective and their channel transfer function can be much better approximated or modelled. Therefore, adaptive coding and modulation concepts can now be applied.

This invention, therefore, provides a novel protocol for a dynamic self-organising sub-channel selection mechanism in an OFDM-TDD (TDD = Time Division Duplexing) based network which does not require central control.

Measuring the interference of a complete channel versus measuring the interference of sub-channels, has a two-fold disadvantage. First, based on the prior art approach, a frequency range for which the distortion would be negligible can not be used if the distortion of the rest of the channel or the majority of the channel can not be neglected. Valuable frequency bands or sub-channels remain unnecessarily unused. Second, certain frequency ranges might show a high distortion, whereas the rest of the frequencies of the channel show a negligible distortion. Using the channel based on "majority decision" might cause unnecessary outages and retransmissions due to the high distortion within the afore mentioned frequency band.

The inventive method provides more accurate distortion decisions and finally achieves improved spectral efficiency in a multi-user, multi-cell environment compared to the prior art.

In a preferred embodiment of the invention, an OFDM-TDD based air-interface is used. The inventive method uses a dynamic sub-channel selection algorithm which involves a physical as well as a MAC (Medium Access Control) layer by exploiting channel reciprocity in TDD, and uses furthermore busy-tone signalling on time-multiplexed sub-channels.

Channel reciprocity of TDD means that a potential interference from, for example, a first mobile station $MS^{Tx}$ transmitting data to a second mobile station $MS^{Rx}$ receiving data is identical to the interference the second mobile station $MS^{Rx}$ transmitting data would impose on the first mobile station $MS^{Tx}$ receiving data provided that the transmit powers are the same.

The inventive method enables a frequency re-use of one, or in other words a frequency re-use of 100%, and basically results in a dynamic FDMA (Frequency Division Multiple Access) component in an OFDM-based air-interface. Clusters of sub carriers, or chunks are assigned for data transmission between a transmitter and a receiver only if these sub-channels cause negligible interference to potential victim receivers, i.e. only if the interference link is deeply faded or attenuated. In order to detect deep fades of the channel, channel sensing by means of busy-tone signalling is used. Since in TDD mode transmission and reception is on the same radio frequency channel, a short signal send out, for example, by the receiver of the intended mobile station (MS) can be used by a dislocated potential interfering transmitter to determine the interference power it would cause to that receiver given that the transmit power of the busy-signal is a priori known by the potential interfering transmitter. This particular mechanism is exploited in this invention. Additionally, provision is made for an adaptive sub-channel assignment when the channel is slowly time varying.

The inventive method, therefore, offers the following advantages: high spectral efficiency in a multi-user, multi-cell environment for broadband wireless access, no requirement for a central radio resource controller for the network, therefore, the inventive technique is applicable for cellular, ad hoc or multi-hop networks, and exhibits a low signalling overhead.

Preferred embodiments of the present invention are described in detail with respect to the following Figures, in which:

Fig. 1A    shows a scenario for an exemplary communication network including two base stations $BS^{Tx}$, $BS^{Rx}$ and two mobile stations $MS^{Rx}$, $MS^{Tx}$;

Fig. 1B    shows an exemplary received busy-tone at potential transmitter $MS^{Tx}$ with two deeply faded sub-channels #n and #p;

Fig. 2    shows an exemplary scenario consisting of two base stations and three mobile stations illustrating the co-channel interference problem in cellular networks with a frequency re-use of one;

Fig. 3A    shows the concept of the inventive dynamic channel allocation mechanism for an OFDM/TDD network with 100% frequency re-use based on the scenario of Fig. 2;

Fig. 3B    shows the received busy tone power at mobile station $MS_2^{Tx}$

Fig. 4    shows a typical two-dimensional frequency response of a radio frequency channel;

Fig. 5    shows a preferred embodiment of the inventive MAC frame structure showing the down link and the uplink transmission;

Fig. 6    shows a flow-chart of a preferred embodiment of the inventive method;

Fig. 7A    shows an exemplary two-dimensional busy-signal during an initialisation phase;

Fig. 7B    shows the exemplary two-dimensional two-dimensional busy-signal of Fig. 7A and a given threshold value;

Fig. 7C    shows an exemplary two-dimensional busy-tone response to a first transmission based on Figs. 7A-B during a channel adaptation phase;

Fig. 8A    shows a simulation setup for comparing the performance of the inventive decentralized dynamic subchannel allocation method and a centralized non-dynamic sub-channel allocation method;

Fig. 8B    shows the average throughout over the average offered load for the simulation setup of Fig. 8A with a threshold $I_{THR}$ = -80 dBm;

Fig. 8C    shows the average throughput over the average offered load for the simulation setup of Fig. 8A with a threshold of $I_{THR}$ = -100 dBm.

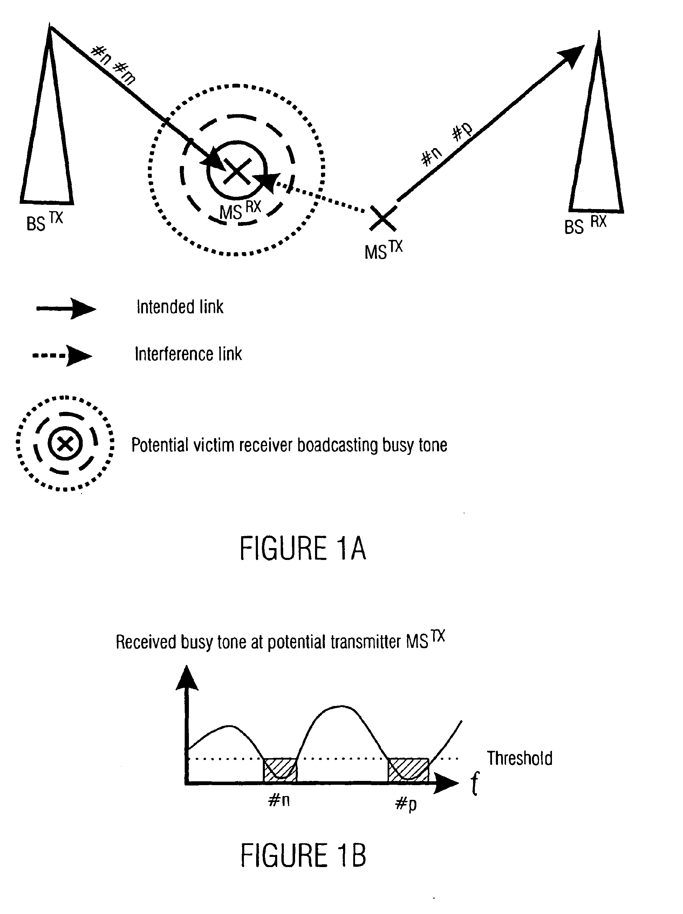

Fig. 1 shows an exemplary communication scenario consisting of two base stations $BS^{Tx}$ and $BS^{Rx}$ and two mobile stations $MS^{Rx}$ and $MS^{Tx}$. $BS^{Tx}$ is transmitting to $MS^{Rx}$ on sub-channels #n and #m. On successful reception $MS^{Rx}$ sends out a busy-signal on a mini-slot at the same channel (because of TDD). Specifically, $MS^{Rx}$ transmits the busy-signal on sub-channels #n and #m (indicated by co-centric circles). At the same time, $MS^{Tx}$ wants to start communicating to $BS^{Rx}$. Before $MS^{Tx}$ starts transmitting, it listens to the busy-signals on all sub-channels. It compares the received power with a pre-defined threshold (for convenience the received busy-signal is drawn as a smooth line - in practice the received signal per sub-channel might vary more abruptly because of multiple transmission sources). $MS^{Tx}$ starts transmission on those sub-channels at which the busy-signal is received below the threshold. In the example, $MS^{Tx}$ is allowed to re-use sub-channel #n. Similarly, it can transmit on sub-channel #p which might be used on some other co-existing link. As the transmission and reception is on the same radio frequency carrier, the potential new transmitter can exactly determine the level of interference it would cause to other links prior to transmission. This is seen as an important advantage.

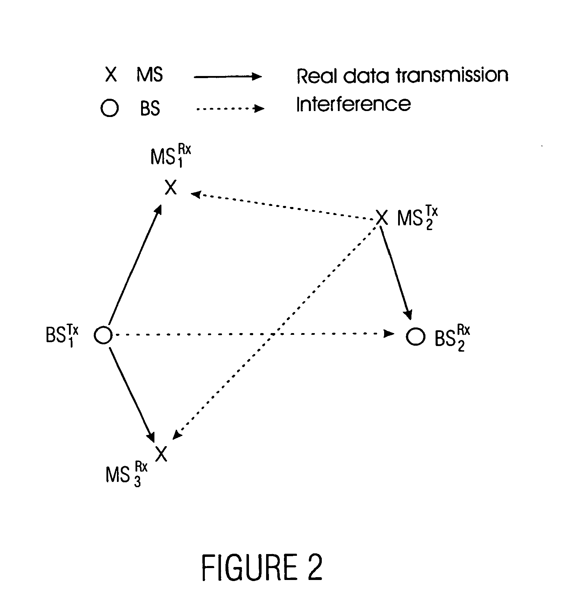

Fig. 2 shows another exemplary, simple scenario consisting of two base stations and three mobile stations in order to illustrate the co-channel interference (CCI) problem in cellular networks with frequency re-use of one and the busy-tone approach. The busy-signal is also referred to as busy-tone or busy-burst.

In the following a transmitting base station (BS) or mobile station (MS) are denoted as $BS^{Tx}$ or $MS^{Tx}$ and a receiving base station or mobile station are denoted as $BS^{Rx}$ or $MS^{Rx}$.

In the example, the mobile station $MS_2^{Tx}$ transmits to the base station $BS_2^{Rx}$. In this scenario $MS_2^{Tx}$ causes CCI to $MS_1^{Rx}$ and $MS_3^{Rx}$, the base station $BS_1^{Tx}$ causes CCI to the base station $BS_2^{Rx}$. On the one hand, the level of CCI in a network with full frequency reuse significantly reduces spectral efficiency. On the other hand, a fixed frequency allocation scheme, too, prohibits high spectral efficiency. The busy-tone concept has been developed to solve this problem in a self-organising fashion. A single carrier based air-interface with TDMA (Time Division Multiple Access) is assumed. Each time slot (TS) is followed by a mini-slot which is used for busy-tone signalling. Upon successful reception of a data packet, a receiver broadcasts a busy-signal on this mini-slot. Each potential transmitter in the vicinity of this receiver first listens to the mini-slot, and if the received signal power at the mini-slot is above the threshold, the new potential transmitter refrains from transmission as it would cause too high interference to the co-existing transmission. Clearly, this is only possible because of the use of TDD.

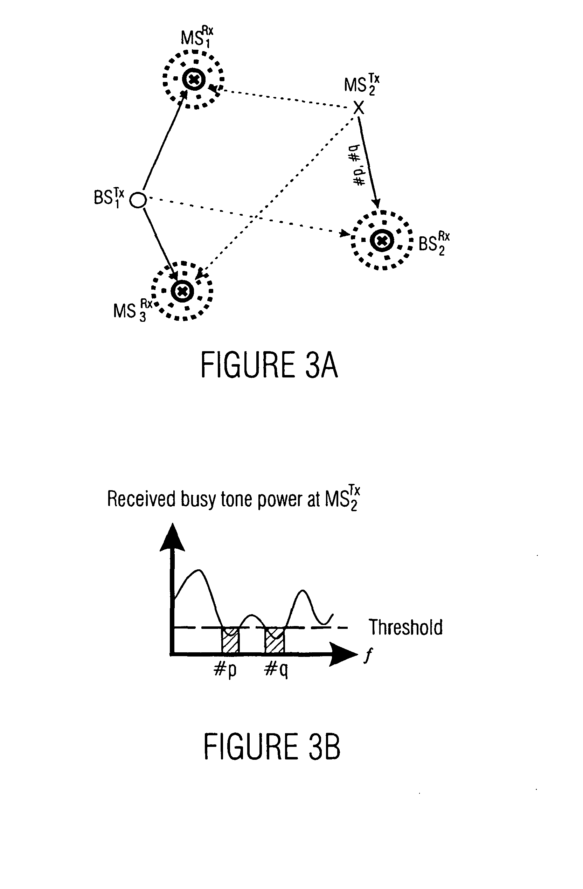

Fig. 3 shows the inventive concept of the dynamic sub-channel allocation mechanism for a multi-user OFDM network based on the scenario already described in Fig. 2. The new dynamic sub-channel allocation method is a new dynamic, scenario dependent and self-organizing channel allocation method especially tailored for an OFDM/TDD based air-interface which exploits the busy-tone approach.

The nature of this protocol is that the transmitter, before sending data, first selects sub-channels which do not cause significant CCI to other users in the network. This is accomplished by sensing the channel at a special time-multiplexed channel referred to as busy-channel, e.g. one particular OFDM symbol, which is used for busy-tone transmission. A receiver upon 'correct' data reception immediately transmits a signal on each of the used sub-channels on the busy-channel to reserve these particular sub-channels for further transmission. Any potential new transmitter will select sub-channels for its transmission based on the received power on the sub-channels of the busy-channel. If the received power on a particular sub-channel is above a certain threshold, this would mean that a co-existing transmission will be greatly interfered. Conversely, if the received power is below that threshold, the channel attenuation is high enough such that usage of this sub-channel would only yield negligible interference to the co-existing transmission. In Fig. 3, for example, $MS_2^{Tx}$ can transmit on sub-channels #p and #q given the depicted received busy-signal from $MS_1^{Rx}$ and $MS_3^{Rx}$.

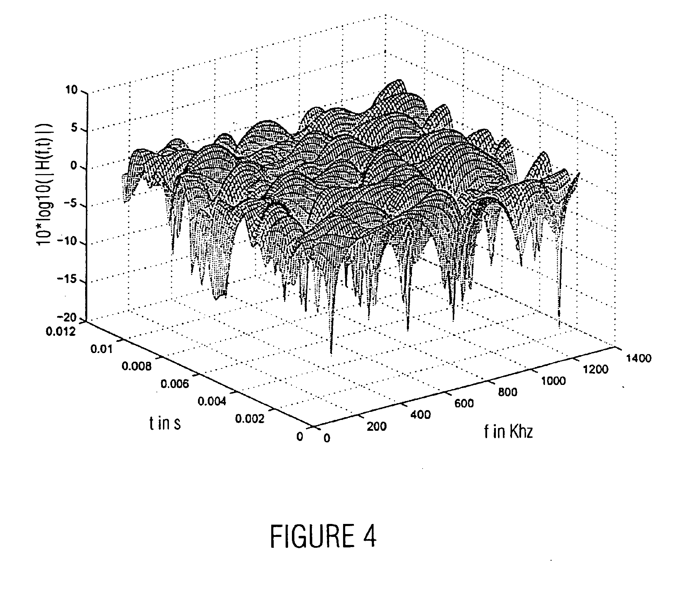

Due to the inherent nature of the wireless channel, the CTF (Channel Transfer Function) of the individual channels may change over time which resembles the initial sub-channel selections sub-optimum. In Fig. 4, a typical two-dimensional frequency response or channel transfer function of a time- and frequency-selective radio frequency channel is depicted. The frequency selectivity of the channel governs the sub-channel selection. The time variability requires a continuous sub-channel selection process, both of which are catered for in this invention.

The inventive method addresses two problems: first, an approach to decide which time/frequency resources of $MS_2^{Tx}$, for example, have negligible interference to the other mobile stations and base stations, and second the assignment of time/frequency resources of the selected sub-channels, for example selected by $MS_2^{Tx}$, and to decide which of the selected sub-channels are not subject to interference at, for example the desired receiver $BS_2^{Rx}$. Due to TDD and its inherent channel reciprocity, the received busy-tone from the mobile stations $MS_1^{Rx}$ and $MS_3^{Rx}$ to $MS_2^{Tx}$ indicate at the same time the potential interference the mobile station $MS_2^{Tx}$ would cause to the mobile stations $MS_1^{Rx}$ and $MS_3^{Rx}$.

Based on the inventive method, $MS_2^{Tx}$ will only transmit on sub-channels which cause negligible interference to the other two mobile stations $MS_1^{Rx}$ and $MS_3^{Rx}$. The decision, whether a transmission on a certain sub-channel to a certain point of time is considered causing negligible interference, is based on a threshold decision, for example the signal or signal power has to be equal or below a certain power threshold.

The entire procedure can be sub-divided into two phases, (a) the link initialisation phase and (b) the continuous and dynamic sub-channel adaptation phase. During the initialization phase a new communication link is established and a number of sub-channels have to be selected. In the adaptation phase, the target receiver has received data, but channel and interference variations make it necessary to select new sub-channels for transmission, or release used sub-channels.

In the following the link initialization phase is explained in more detail. It is assumed that the m-th BS wants to set-up a link to the k-th MS in the (i-2)-th MAC frame, i.e. the inter-arrival is at a random time position in the (i-2)-th MAC frame, and it is, therefore, not guaranteed that the busy-channel can be heard during this MAC frame period. Hence, the BS has to defer its transmission until the next MAC frame, i.e. the (i-1)-th MAC frame where it gets the first proper chance to listen to the busy-channel. The received busy-signal is compared against a given threshold as explained before. Notice that the received busy-signals at this point of time can only result from non-intended MSs or BSs (potential entities which might suffer interference if transmission started) as the target receiver has not, as yet, received any data, i.e. a busy-signal could not have been transmitted. This means that the m-th BS commences data transmission to the k-th MS on these sub-channels. The k-th MS determines the SINR (signal-to-interference plus noise) on each of these sub-channels. Based on the required QoS (Quality of Service) for that particular service it will decide whether to 'reserve' the respective sub-channel, or whether to 'release' it. In the latter, it would not transmit the busy-signal on that corresponding sub-channel, whereas in the former it would reserve the respective sub-channel by 'protecting' it using the busy-signal. Clearly, this protection is only feasible because of the use of TDD. Note that the SINR at a particular sub-channel might be small because either the channel of this sub-channel on the desired link is deeply faded, or because there is high interference resulting from another transmission. Therefore, the busy-signal is not broadcast on this sub-channel in the next, i-th, MAC frame.

In order to mathematically model this behaviour, $a_{l,i-1}^{k,m}$ is defined which is a binary variable that indicates whether or not the use of a particular sub-channel, 1, at the (i-1)-th MAC frame on the link between the m-th BS and the k-th MS causes intolerably high interference to some other receiving node. If sub-channel 1 at MAC frame (i-1) is assigned for the link between m-th BS and k-th user, then $a_{l,i-1}^{k,m} = 1$, otherwise, $a_{l,i-1}^{k,m} = 0$. The outcome of this assignment, i.e. whether this particular sub-channel is used for this communication link, is obtained by comparing the received busy-signal with the threshold. This can be expressed as,

$$a_{l,i-1}^{k,m} = \begin{cases} 1 & \text{if } |\widehat{B}_{l,i-1}^m|^2 \leq I_{thr} \\ 0 & \text{otherwise,} \end{cases} \tag{1}$$

where $\widehat{B}_{l,i-1}^m$ is the received busy-signal at the m-th BS on the 1-th sub-channel in the (i-1)-th MAC frame. The threshold, which is a measure for the interference that this transmission would cause to other co-existing transmissions, is denoted as $I_{thr}$. At the (i-1)-th MAC frame, the receiver, the k-th MS, estimates the SINR and decides if this sub-channel is to be reserved. The outcome of this decision is described by $b_{l,i-1}^{k,m}$, where $b_{l,i-1}^{k,m} = 1$ if the estimated SINR $\breve{\gamma}_{l,i-1}^k$ is above the required SINR $\gamma_{\text{req.}}$, otherwise $b_{l,i-1}^{k,m} = 0$. This means,

$$b_{l,i-1}^{k,m} = \begin{cases} 1 & \text{if } \left(a_{l,i-1}^{k,m} = 1\right) \text{ and } \left(\breve{\gamma}_{l,i-1}^k \geq \gamma_{\text{req.}}\right) \\ 0 & \text{otherwise,} \end{cases} \tag{2}$$

Note that the decision for the value of $a_{l,i-1}^{k,m}$ is made by the transmitter to mitigate CCI, whereas the decision for the value of $b_{l,i-1}^{k,m}$ is made by the receiver to release those sub-channels which do not fulfil the SINR target.

In the following the phase of the dynamic sub-channel allocation is explained in more detail. For any MAC frame greater than or equal to i, the received busy-signal powers are composed of the signal powers of the intended user, the k-th MS, and the busy-signal powers of all other entities which are potentially subject to interference. This means that the busy-signal power for the sub-channels used is different from that in the (i-1)-th MAC frame in which the communication between the m-th BS and the k-th MS was initiated, and in which the intended receiver, the k-th MS, has not transmitted a busy-signal.

The received busy-signal in the downlink sub-frame of the i-th MAC frame can be written as follows

$$\widehat{B}_{l,i}^m = H_{l,i}^{k,m} B_{l,i}^k b_{l,i-1}^{k,m} + \sum_{\forall k' \neq k} H_{l,i}^{k',m} B_{l,i}^{k'} b_{l,i-1}^{k',m} \tag{3}$$

where $B_{l,i}^k$ and $\widehat{B}_{l,i}^m$ are the transmitted and the received busy-signal on the 1-th sub-channel and at the i-th MAC frame between the k-th MS and the m-th BS, respectively. The denotation $H_{l,i}^{k,m}$ represents the CTF coefficient for the 1-th sub-channel and the i-th MAC frame of the transmission between the m-th BS and the k-th MS, i.e. the desired link. Similarly, the symbol $H_{l,i}^{k',m}$ is the CTF coefficient between the k'-th terminal (it could be an MS or BS of a co-existing link) and the m-th BS. The transmitter can determine whether $b_{l,i-1}^{k,m} = 1$, again, by exploiting the channel reciprocity in TDD as follows,

$$b_{l,i-1}^{k,m} = \begin{cases} 1 & \text{if } \left(|\widehat{B}_{l,i}^m|^2 \geq I_{thr}\right) \text{and} \left(a_{l,i-1}^{k,m} = 1\right) \\ 0 & \text{otherwise,} \end{cases} \tag{4}$$

The condition for the sub-channel assignment on the desired link between the m-th BS and the k-th MS for the i-th, and any MAC frame greater than i, is given as follows,

$$a_{l,i}^{k,m} = \begin{cases} 1 & \text{if } \left(\overline{a}_{l,i-1}^{k,m} \mid \widehat{B}_{l,i}^{m} \mid^2 \leq I_{thr}\right) \text{or} \left(b_{l,i-1}^{k,m} = 1\right) \\ 0 & \text{otherwise} \end{cases} \tag{5}$$

where $\overline{a}$ is the logic complement of a. In eqn. (5), the condition $\left(a_{l,i-1}^{k,m} \mid \widehat{B}_{l,i}^{m} \mid^2 \leq I_{thr}\right)$ means the sub-channel l has not been selected in the (i-1)-th MAC frame and the received busy-signal on this sub-channel at the busy-tone slot of the i-th MAC frame is lower than the given threshold. If this condition is fulfilled, then this sub-channel is selected for data transmission in the next MAC frame. The condition $b_{l,i-1}^{k,m} = 1$ means that the sub-channel 1 has been selected in the previous MAC frame and the required SINR is maintained. In this case, the sub-channel 1 is continued to be selected for this link.

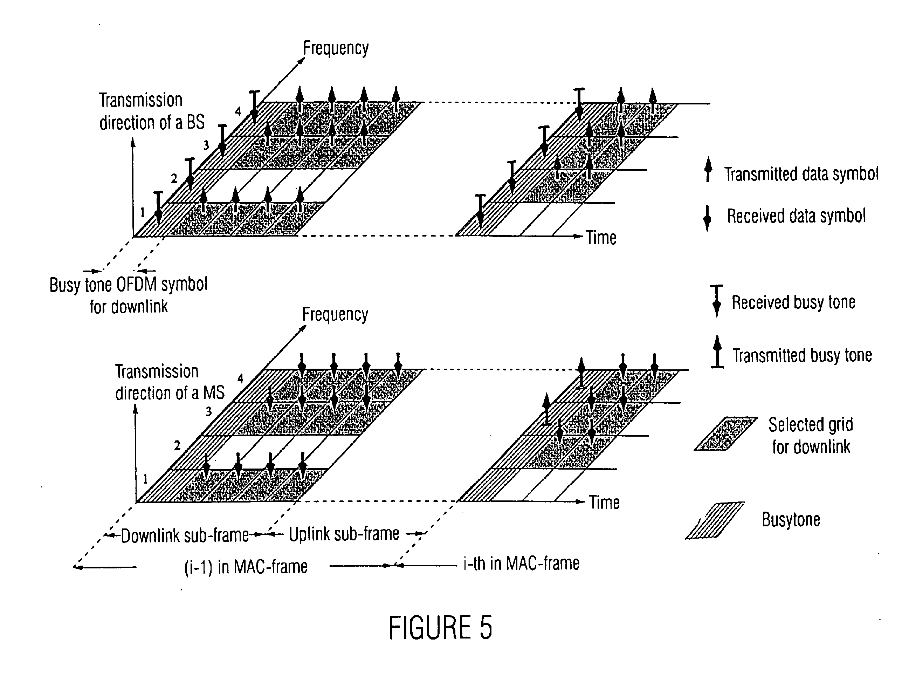

Fig. 5 shows an exemplary embodiment of the MAC frame structure which accounts for downlink and uplink transmission. The upper part of Fig. 5 depicts transmission and reception of signals from the BS point of view. Similarly, the lower part depicts transmission and reception from the MS point of view. The structure of an uplink sub-frame is similar to the structure of a downlink sub-frame. Due to this similarity and to ensure greater clarity the uplink sub-frame is not explained further at this point. Each sub-frame includes a busy-channel (one OFDM symbol) for busy-tone signalling. The MAC frame duration is selected such that the channel does not change significantly.

Fig. 5 shows an exemplary communication between a base station and a mobile station, wherein the base station wants to send data to the mobile station. Likewise to the prior explanation about the two phases "link initialization" and "dynamic sub-channel adaptation", the base station wants to set up the communication link to the mobile station in the (i - 2)-th MAC frame. Therefore, at the (i - 1)-th MAC frame, it first listens to the busy-signal on all sub-channels. In the example, it is assumed that the received busy-signal power of the first, third and fourth sub-channels falls below the given threshold which are subsequently selected for data transmission. It is further assumed that the SINR on the first sub-channel in the downlink at the intended MS is unacceptable. Therefore, the MS does not broadcast the busy-signal on the first sub-channel in the next, i-th, MAC frame, i.e. the MS transmits the busy-signal only on the third and fourth sub-channels. Because of channel variations on the interference link, the busy-signal on the second sub-channel at the i-th MAC frame is received below the threshold. Therefore, the second sub-channel is selected for downlink transmission in the ith MAC frame. Note that the first sub-channel is released as the required SINR at the intended MS was not achieved in the i-1-th MAC frame.

In Fig. 5 the transmitter or the transmitting base station analyses the various busy-tones and sends based on the analysis the data in the same MAC frame. Alternative concepts with delays, for example between the analysis of the busy-tones and the first sending of data are possible, but short or no delays are preferred due to the time dependence of the general transfer function and interference by other transmitters.

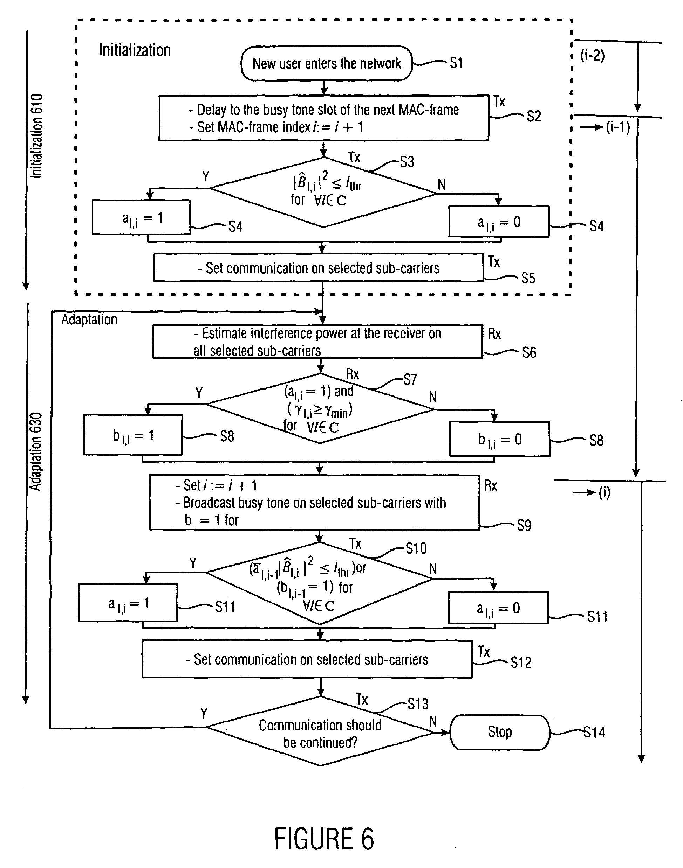

Fig. 6 shows a flow-chart of a preferred embodiment of the inventive method. In Fig. 6 additionally to the flow-chart the respective entities, Tx for transmitter and Rx for receiver, performing the described task are shown. On the right hand side of Fig. 6 frame indexes (i - 2), (i - 1) and (i) have been added for an easier comparison to the afore mentioned descriptions of the phases of "initialization" and "dynamic sub-channel adaptation".

The following descriptive text to Fig. 6 in contrast there to, explains the method including the steps of incrementing "i" as shown in Fig. 6. The initialization phase 610 and the adaptation phase or continuous adaptation of sub-channels 630 is shown in Fig. 6. At initialization 610, it is assumed that there is a new arrival in the network in the MAC frame i (steps S1, S2). A set of sub-channels will be selected by comparing the square amplitude of the received busy-signal $|\widehat{B}_{l,i}|^2$ with the threshold (step S3). In Fig. 6, the user indices k and m are neglected for simplicity. Depending on the comparison result, the corresponding value of the channel assignment symbol $a_{l,i}$ will be set (step S4). This comparison is executed for $\forall l \in C$, where C is the set of all sub-channels of the system. Subsequently, data symbols are transmitted on the selected sub-channels (step S5).

Together with the data symbols an indication may be sent to the receiver, for example the general assignment symbol $a_{l,i}$ to indicate for which receiver the data is addressed to, and to indicate from which transmitter the data is transmitted from. Based on this information each receiver knows whether the data on a particular sub-channel is addressed to the particular receiver .

The initialization phase 610 for the communication between the transmitter and the receiver ends with the first transmission of data by the transmitter.

The adaptation phase 630 of the communication link between the transmitter and the receiver starts with the first interference power estimation at the receiver on all selected sub-carriers (step S6), and starting from there on is continuously performed by the receiver and the transmitter until the link is terminated or the communication is terminated (step S14).

In addition to data equalization and detection, the receiver estimates the SINR on the selected sub-channels (step S6). A selected sub-channel is continued to be used for the next MAC frame, i.e. $b_{l,i}$ = 1, if the estimated SINR $\tilde{\gamma}_{l,i}$ on this sub-channel is greater than the required value $\gamma_{min}$. which is denoted $\gamma_{req}$. in (2) and which actually depends on the QoS constraint (steps S7, S8).

The MAC frame index points to the next MAC frame i := i+1. The busy-signal is transmitted by the receiver on the selected sub-channels with $b_{l,i}$ = 1 using the busy-channel (step S9).

On the busy-channel, the transmitter continuously checks the condition of eqn. (5) to adapt the set of used sub-channels for the respective link (steps S10 -S12).

If the communication on the particular link should be continued in the next MAC frame (step S13), Steps 2-5 are repeated, if not, the communication is terminated (step S14).

In a preferred embodiment of the invention, the transmitter also transmits an information to the receiver if the transmitter wants to send more data in general or more data particularly over this selected sub-channel to the transmitter in the following frame. In the case where the transmitter signals that there is no further data to be sent over the selected sub-channel in the next frame, the receiver will not send a busy-signal even if the quality or SINR was greater than the predetermined fourth threshold.

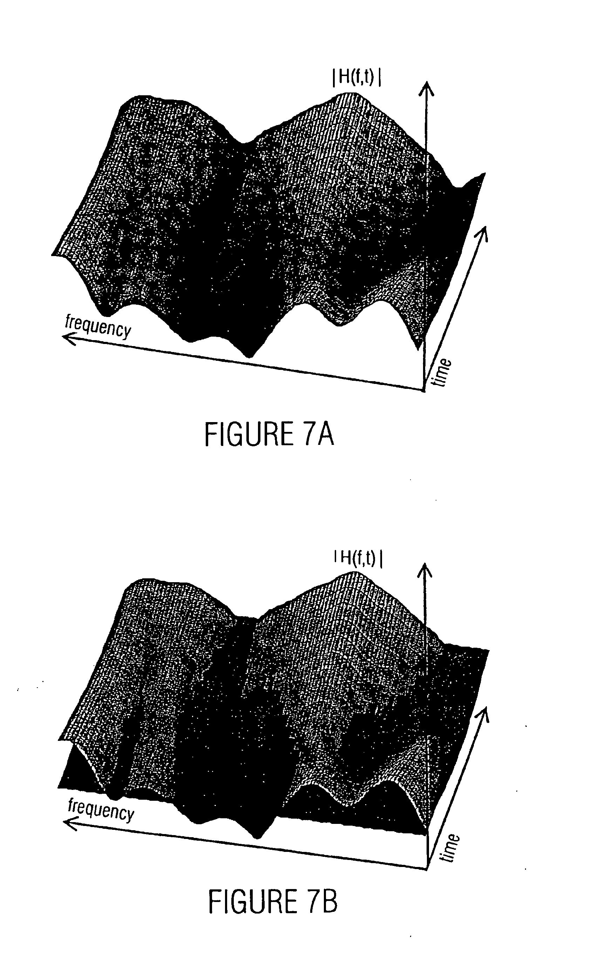

Fig. 7A shows an exemplary received two-dimensional busy-signal H(f,t) at for example mobile station $MS_2^{Tx}$ of Fig. 3 and clearly shows that all links are subject to general variations in time and frequency.

Fig. 7B shows the received busy-tone at $MS_2^{Tx}$ as shown in Fig. 7A with an exemplary threshold value depicted, the black plane. Based on the received busy-tone $MS_2^{Tx}$ would only chose those sub-channels for a transmission which are below the black plane. The receiver or receiving base station $BS_2^{Rx}$ transmits a busy-tone after successful reception of the data sent by $MS_2^{Tx}$, wherein the receiving base station $BS_2^{Rx}$ transmits only busy-tones on sub-channels, which are claimed or allocated by the transmitting mobile station $MS_2^{Tx}$ and are not subject to interference at the receiving base station $BS_2^{Rx}$. Based on these pre-requisites, adaptive coding and modulation methods can now be applied.

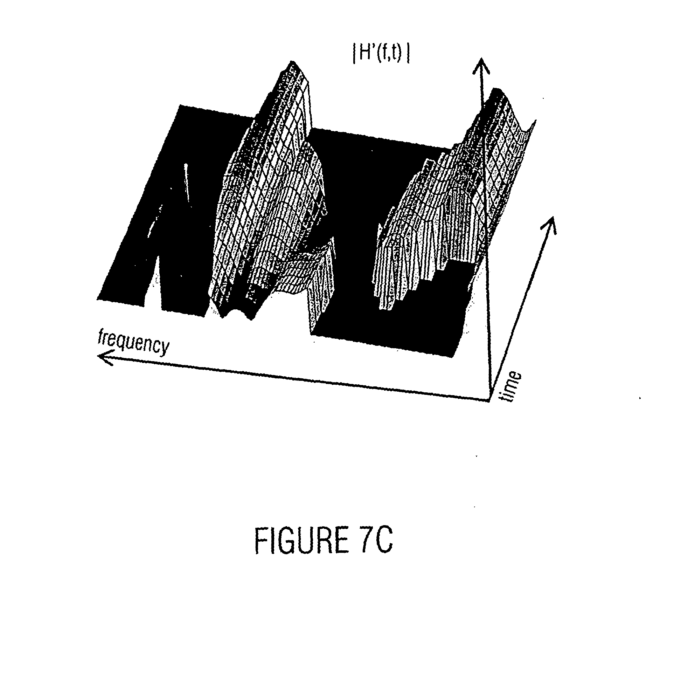

An exemplary busy-tone from the receiving base station $BS_2^{Rx}$ to the transmitting mobile station $MS_2^{Tx}$, H' (f,t), is shown in Fig. 7C. When compared to Fig. 7B it is clearly seen that the received busy-tone H' (f,t) shows signal power values above a threshold, $\gamma_{req}$., for frequencies for which the signal power values in the received busy-tone H(f, t) were below the threshold, $I_{thr}$, as shown in Fig. 7B. It should be noted that there are two thresholds, wherein the value of these thresholds need not to be the same.

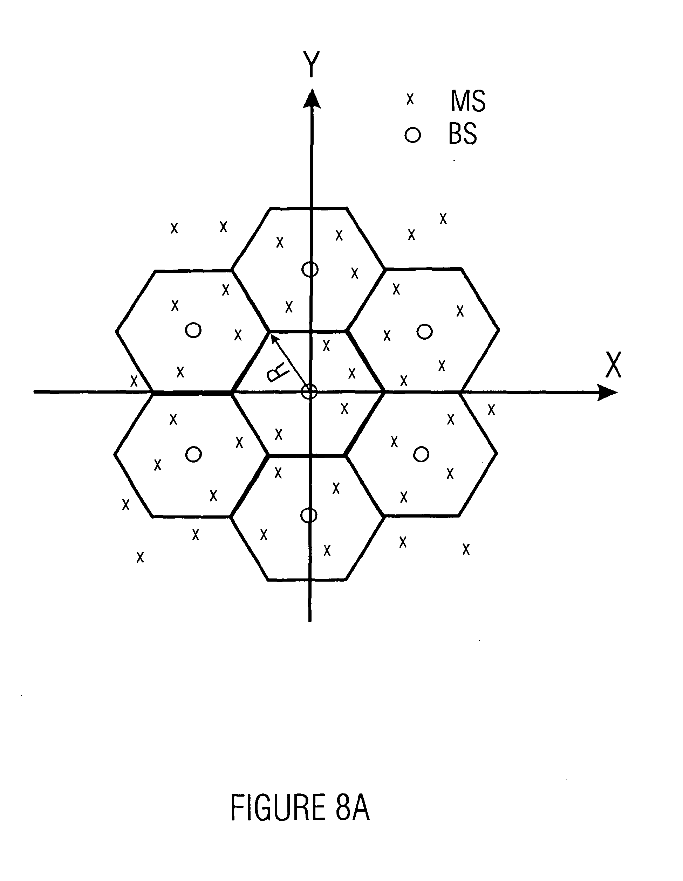

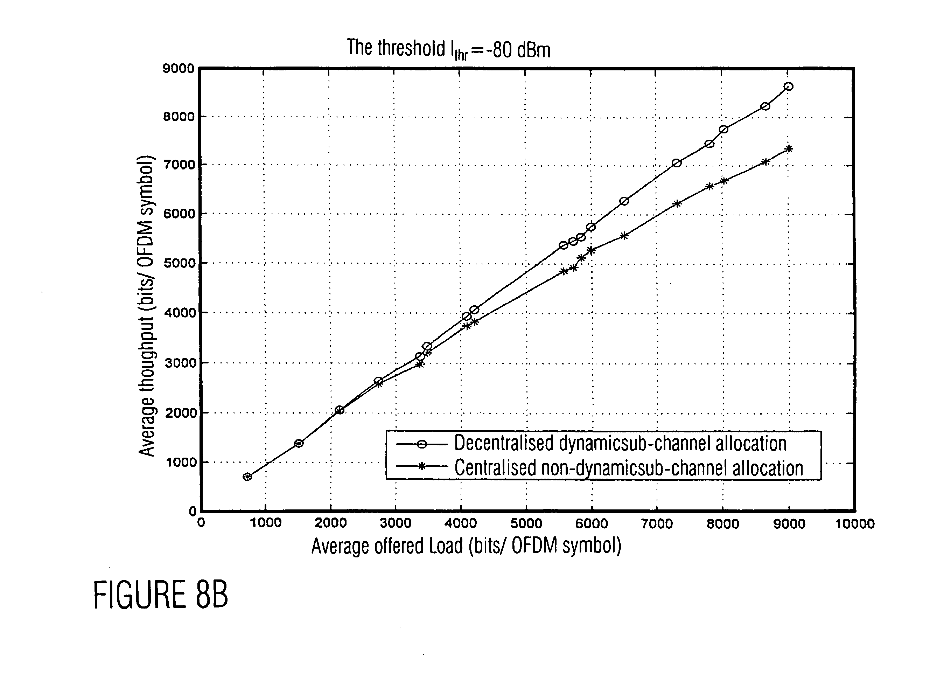

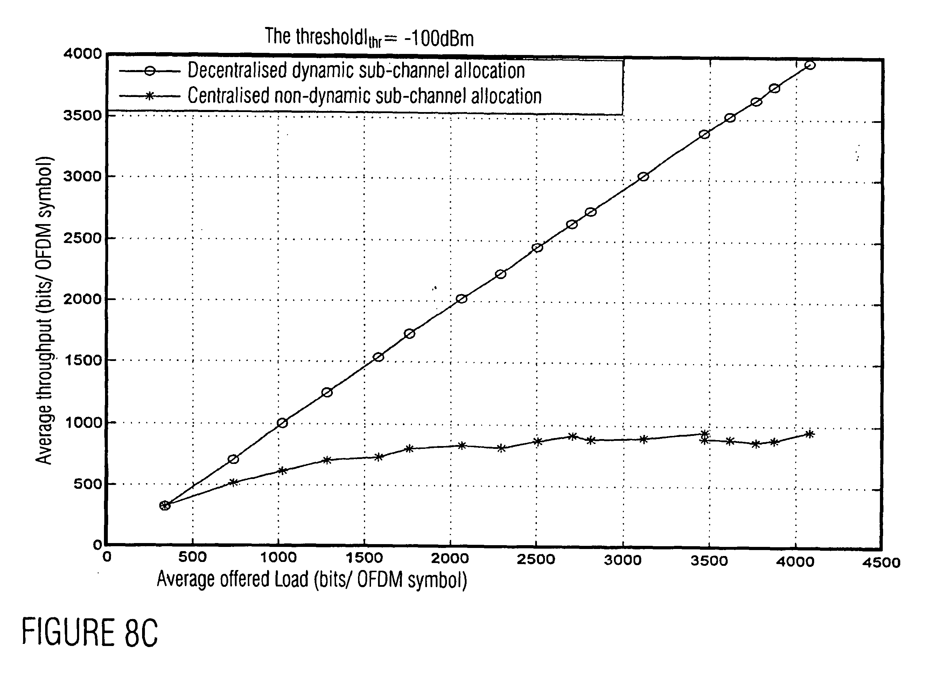

Fig. 8A shows an exemplary simulation setup to compare the inventive method being a decentralized dynamic sub-channel allocation method, and a possible centralized non-dynamic sub-channel allocation method. Fig. 8 shows an OFDM/TDD setup with a system band width B = 20 MHz and FFT length $N_{FFT}$ = 256, comprising a channel model based on a maximum Doppler frequency $f_{D,max}$ = 500 Hz and a maximum channel delay of $T_{max}$ = 6.4 $\mu$s, and being based on a cellular system model with a cell radius of 500 meters and uniformly distributed mobile stations.

Fig. 8B shows an average throughput of the system over an average offered load for both afore mentioned methods at a threshold $I_{thr}$ = -80 dBm. The graphs of both methods show an almost linear increase of the average throughput with the average offered load, nevertheless Fig. 8B shows already that the inventive method outperforms the centralized non-dynamic sub-channel allocation method.

Fig. 8C shows again the average throughput versus the average offered load for both afore mentioned methods, but now with a threshold of $I_{thr}$ = -100 dBm. At this threshold level the inventive method clearly outperforms the centralized non-dynamic sub-channel allocation method. The average throughput for the inventive method still increases linearly with the average offered load whereas the average throughput of the centralized non-dynamics sub-channel allocation method does not exceed 1.000 bits per OFDM symbol.

It should be noted that the inventive method is applicable for any combination of transmitting and receiving devices, for example a transmitting mobile station and a receiving mobile station, a transmitting mobile station and a receiving base station, a transmitting base station and a receiving base station and a transmitting base station and a receiving base station. Thus, the inventive method provides a communication method for, as described before, cellular networks, ad hoc networks and multi-hop networks due to its decentralized, self-organizing dynamic sub-channel allocation between all nodes within a communication network based on the inventive communication method.

Furthermore, it should be noted that an inventive method can use a same threshold value for all decisions or can be implemented to comprise different threshold values for the different situations a decision has to be made, for example a first threshold in case the transmitter has already used the sub-channel for data communication, a second or third threshold in case the sub-channel has not been used for a data transmission in a preceding frame, for example during initialization or later during the adaptation phase (second or third threshold for the busy-signal evaluation).

Typically the absolute power values are given by the regulator. Therefore, the absolute power values not only of the payload data but also of the busy-signal may be specified by the regulator. Exemplary power values of the busy-signal are in a range of -40 dBm to 50 dBm at the point of transmission and the first, second and third predetermined thresholds of a power value of the busy-signal in a range of -40 dBm and -150 dBm. Alternatively the power values of the busy-signal can also be expressed relative to the power level of the payload data, e.g. that the busy signal is between 20dB stronger and 20dB weaker with respect to the payload data.

In summary, in broadband wireless access the radio frequency channel is generally frequency selective. In addition, it can be assumed that the channel is slowly fading, for example due to low Doppler spread. This applies to the desired as well as the interference link in a multi-cell environment. While methods such as water filling and bit loading work well in single link and single user transmission, no effective solutions exist which also consider the frequency selectivity on the interference link in a multi-user and multi-cell deployment. The invention provides a new dynamic sub-channel allocation protocol, which involves the physical layer as well as the MAC layer for, for example, an OFDM-TDD based cellular system or air-interface. The inventive method or related protocols exploit the channel reciprocity of TDD and the busy-tone signalling on, for example, time-multiplexed sub-channels in order to establish a two-fold mechanism; first interference avoidance and second link adaptation. Concerning interference avoidance it can be summarized that the protocol ensures

The protocol ensures that existing transmissions are protected. This means that any new transmitter is aware of the level of interference it would cause to an existing transmission, and is able to make appropriate decisions, i.e. (a) refrain from using a particular sub-channel because it would cause too much interference to a co-existing link, or (b) use a particular sub-channel because interference caused to other links is negligible. Thereby, a dynamic, interference-sensitive and self-organising FDMA mechanism in OFDM is achieved. This means, the transmitter selects sub-channels solely based on interference which may be caused elsewhere.

Concerning link adaptation, it can be said that once those sub-channels are identified that can be used for transmission, i.e. those which do not significantly degrade other co-existing links, the target receiver will decide based on the received SINR in combination with the respective QoS requirements for that particular service, which of the chosen sub-channels can be used for transmission (note that interference at the receiver is different from interference at the transmitter). The result of this selection is indicated to the transmitter also using the busy-channel by sending signal power on those sub-channels which can be used for transmission on the actual link. This means, the receiver at the same time 'selects' and 'protects' sub-channels by using busy-tone signalling in TDD.

Summarizing the advantages of the inventive method for dynamic sub-channel allocation it can be said that the inventive method dynamically manages interference utilizing busy burst signalling, achieves high spectral efficiency in a multi-user, multi-cell environment, does not require a central radio resource controller for the network, thus being applicable for cellular, ad hoc and multi-hop networks, and finally results in low signalling overhead.

Depending on certain implementation requirements of the inventive methods, the inventive methods can be implemented in hardware or in software. The implementation can be performed using a digital storage medium, in particular a disc, DVD or a CD having electronically readable control signals stored thereon, which cooperate with a programmable computer system such that the inventive methods are performed. Generally, the present invention is, therefore, the computer program product with a program code stored on a machine readable carrier, the program code being operative for performing the inventive methods when the computer program product runs on a computer. In other words, the inventive methods are therefore, a computer program having a program code for performing at least one of the inventive methods when the computer program runs on a computer.

Reference Sign List

Tx     transmitter
Rx     receiver
610     initialization phase
630     adaptation phase
S1     new user enters the network or communication request to the transceiver
S2     delay to the busy-tone slot of the next MAC frame

S3      comparing the square amplitude of the received busy-signal with the third threshold
S4      setting off the channel assignment symbol $a_{l,i}$
S5      transmission on selected sub-carriers
S6      estimate interference power at the receiver on all selected sub-carriers
S7      comparing the SINR on the selected sub-channels with a predetermined fourth threshold
S8      Setting of the sub-channel confirmation symbol $b_{l,i}$
S9      broadcast busy-signal on selected and confirmed subcarriers
S10     comparing the square amplitude of the received busy-signal to adapt the set of used sub-channels
S11     setting the channel assignment symbol $a_{l,i}$
S12     set communication on selected sub-carriers
S13     decision about continuation of the communication
S14     termination of the communication link

**Claims**

1.  Method for a dynamic frequency sub-channel allocation for communication between a transmitter and a receiver in a communication system comprising a communication channel having a plurality of frequency sub-channels, the method comprising:

    receiving at the transmitter from the plurality of frequency sub-channels respective busy-signals, each busy-signal being indicative of a communication on the respective frequency sub-channel in the communication system; and
    selecting one or more frequency sub-channels (S3, S10) for a communication between the transmitter and the receiver by allocating a frequency sub-channel (S4, S11) for the communication,

    wherein the step of selecting comprises allocating a frequency sub-channel which was used for a communication between the transmitter and the receiver in a preceding communication interval, in case the busy-signal received from the frequency sub-channel is equal to or greater than a first predetermined threshold
    and
    wherein the step of selecting comprises allocating a frequency sub-channel which was not used for a communication between the transmitter and the receiver in a preceding communication interval in case the busy-signal received from the frequency sub-channel is equal to or less than a second predetermined threshold.

2.  Method of claim 1, further comprising the following step for initializing (610) a communication between the transmitter and the receiver,
    receiving at the transmitter from the plurality of frequency sub-channels respective busy-signals, each busy-signal being indicative of a communication on the respective frequency sub-channel in the communication system; and
    selecting one or more frequency sub-channels (S3) for a communication between the transmitter and the receiver by allocating (S4) a frequency sub-channel for the communication, in case the busy-signal received from the frequency sub-channel is equal to or less than a third predetermined threshold.

3.  Method of claims 1 or 2, wherein the step of selecting one or more frequency sub-channels is based on comparing a power value of the busy-signal with a threshold.

4.  Method of claim 3, wherein the power value of the busy-signal is in a range of 20 dBm to 50 dBm at the point of transmission and the first, the second and a third predetermined threshold of a power value of the busy-signal are equal and in a range of -80 dBm and -120 dBm.

5.  Method of one of the claims 1 to 4, wherein the receiver generates the busy-signal (S9) on a frequency sub-channel allocated for communication by the transmitter in case the signals received over the allocated frequency sub-channel at the receiver are equal to or greater than a fourth threshold (S7, S8).

6.  Method of claim 5, wherein the receiver generates the busy-signal on a frequency sub-channel allocated for communication by the transmitter in case the SINR (Signal-to-Interference+Noise) value of the signals received over the allocated frequency sub-channel at the receiver are equal to or greater than the fourth threshold.

7.  Method of claims 5 or 6, wherein the fourth threshold is adapted based on the class of service or quality of service required for the communication.

8.  Method of one the claims 1 to 7, wherein the communication system is based on OFDM/TDD (Orthogonal Frequency Division Multiplexing/Time Division Duplexing).

9.  Method of claim 8, wherein the frequency sub-channels' respective busy-signal is transmitted at a specific time multiplexed channel of the sub-channel.

10. Method of claim 8 or 9, wherein the frequency sub-channels' respective busy-signal is transmitted as a particular OFDM symbol.

11. Computer program having a program code for, when executed on a computer, performing the method steps of a method in accordance with any of the claims 1 to 10.

12. Transmitter for dynamic frequency sub-channel allocation for communication with a receiver in a communication system comprising a communication channel having a plurality of frequency sub-channels, the transmitter comprising:

    a means for receiving from the plurality of frequency sub-channels respective busy-signals, each busy-signal being indicative of a communication on the respective frequency sub-channel in the communication system; and
    a controller for selecting one or more frequency sub-channels for a communication between the transmitter and the receiver by allocating a frequency sub-channel for the communication,

    wherein the controller is implemented to allocate a frequency sub-channel which was used for a communication between the transmitter and the receiver in a preceding communication interval, in case the busy-signal received from the frequency sub-channel is equal to or greater than a first predetermined threshold
    and
    wherein the controller is implemented to allocate a frequency sub-channel which was used for a communication between the transmitter and the receiver in a preceding communication interval, in case the busy-signal received from the frequency sub-channel is equal to or less than a second predetermined threshold.

13. A receiver for communication with a transmitter operative for dynamic frequency sub-channel allocation in a communication system comprising a communication channel having a plurality of frequency sub-channels, the receiver comprising:

    a means for receiving signals over a frequency sub-channel allocated for communication by the transmitter;
    a means for generating a busy-signal on the frequency sub-channel allocated for communication by the transmitter in case the SINR (Signal-to-Interference+Noise) value of the signals received over this allocated frequency sub-channel are equal to or greater than a predetermined threshold and the transmitter has indicated that there is more data to be sent, wherein the decision whether to broadcast the busy-signal is carried out on a per frequency sub-channel basis.

14. A receiver according to claim 13, wherein the threshold is adapted based on the class of service or quality of service required for the communication.

15. A system for communication comprising:

    a transmitter according to claim 12 and
    a receiver according to claim 13.


**Patentansprüche**

1.  Verfahren für eine dynamische Frequenzteilkanalzuweisung für eine Kommunikation zwischen einem Sender und einem Empfänger in einem Kommunikationssystem, das einen Kommunikationskanal mit einer Mehrzahl von Frequenzteilkanälen aufweist, wobei das Verfahren folgende Schritte aufweist:

    Empfangen von jeweiligen Belegtsignalen von der Mehrzahl von Frequenzteilkanälen an dem Sender, wobei jedes Belegtsignal eine Kommunikation auf dem jeweiligen Frequenzteilkanal in dem Kommunikationssystem angibt; und

Auswählen eines oder mehrerer Frequenzteilkanäle (S3, S10) für eine Kommunikation zwischen dem Sender und dem Empfänger durch ein Zuweisen eines Frequenzteilkanals (S4, S11) für die Kommunikation,

wobei der Schritt des Auswählens ein Zuweisen eines Frequenzteilkanals aufweist, der für eine Kommunikation zwischen dem Sender und dem Empfänger in einem vorhergehenden Kommunikationsintervall verwendet wurde, falls das Belegtsignal, das von dem Frequenzteilkanal empfangen wird, gleich oder größer als eine erste vorbestimmte Schwelle ist,

und

wobei der Schritt des Auswählens ein Zuweisen eines Frequenzteilkanals aufweist, der nicht für eine Kommunikation zwischen dem Sender und dem Empfänger in einem vorhergehenden Kommunikationsintervall verwendet wurde, falls das Belegtsignal, das von dem Frequenzteilkanal empfangen wird, gleich oder kleiner als eine zweite vorbestimmte Schwelle ist.

2. Verfahren gemäß Anspruch 1, das ferner einen folgenden Schritt zum Initialisieren (610) einer Kommunikation zwischen dem Sender und dem Empfänger aufweist,

Empfangen von jeweiligen Belegtsignalen von der Mehrzahl von Frequenzteilkanälen an dem Sender, wobei jedes Belegtsignal eine Kommunikation auf dem jeweiligen Frequenzteilkanal in dem Kommunikationssystem angibt; und

Auswählen eines oder mehrerer Frequenzteilkanäle (S3) für eine Kommunikation zwischen dem Sender und dem Empfänger durch ein Zuweisen (S4) eines Frequenzteilkanals für die Kommunikation, falls das Belegtsignal, das von dem Frequenzteilkanal empfangen wird, gleich oder kleiner als eine dritte vorbestimmte Schwelle ist.

3. Verfahren gemäß Anspruch 1 oder 2, bei dem der Schritt des Auswählens eines oder mehrerer Frequenzteilkanäle auf einem Vergleichen eines Leistungswertes des Belegtsignals mit einer Schwelle basiert.

4. Verfahren gemäß Anspruch 3, bei dem der Leistungswert des Belegtsignals an dem Sendungpunkt in einem Bereich von 20 dBm bis 50 dBm ist und die erste, die zweite und eine dritte vorbestimmte Schwelle eines Leistungswertes des Belegtsignals gleich und in einem Bereich von -80 dBm und -120 dBm sind.

5. Verfahren gemäß einem der Ansprüche 1 bis 4, bei dem der Empfänger das Belegtsignal (S9) auf einem Frequenzteilkanal erzeugt, der für eine Kommunikation durch den Sender zugewiesen wird, falls die Signale, die über den zugewiesenen Frequenzteilkanal an dem Empfänger empfangen werden, gleich oder größer als eine vierte Schwelle (S7, S8) sind.

6. Verfahren gemäß Anspruch 5, bei dem der Empfänger das Belegtsignal auf einem Frequenzteilkanal erzeugt, der für eine Kommunikation durch den Sender zugewiesen wird, falls der SINR-Wert (SINR = Signal-to-Interference+Noise = Signal-zu-Rausch+Störung) der Signale, die über den zugewiesenen Frequenzteilkanal an dem Empfänger empfangen werden, gleich oder größer als die vierte Schwelle ist.

7. Verfahren gemäß Anspruch 5 oder 6, bei dem die vierte Schwelle basierend auf der Dienstklasse oder Dienstgüte angepasst wird, die für die Kommunikation erforderlich ist.

8. Verfahren gemäß einem der Ansprüche 1 bis 7, bei dem das Kommunikationssystem auf OFDM/TDD (OFDM/TDD = Orthogonal Frequency Division Multiplexing/Time Division Duplexing = Orthogonal-Frequenzteilungsmultiplexen/Zeitteilungsduplexen) basiert.

9. Verfahren gemäß Anspruch 8, bei dem das jeweilige Belegtsignal der Frequenzteilkanäle an einem spezifischen zeitgemultiplexten Kanal des Teilkanals gesendet wird.

10. Verfahren gemäß Anspruch 8 oder 9, bei dem das jeweilige Belegtsignal der Frequenzteilkanäle als ein bestimmtes OFDM-Symbol gesendet wird.

11. Computerprogramm mit einem Programmcode zum Durchführen der Verfahrensschritte eines Verfahrens gemäß einem der Ansprüche 1 bis 10, wenn dasselbe auf einem Computer ausgeführt wird.

12. Sender für eine dynamische Frequenzteilkanalzuweisung für eine Kommunikation mit einem Empfänger in einem Kommunikationssystem, das einen Kommunikationskanal mit einer Mehrzahl von Frequenzteilkanälen aufweist,

wobei der Sender folgende Merkmale aufweist:

eine Einrichtung zum Empfangen von jeweiligen Belegtsignalen von der Mehrzahl von Frequenzteilkanälen, wobei jedes Belegtsignal eine Kommunikation auf dem jeweiligen Frequenzteilkanal in dem Kommunikationssystem angibt; und
eine Steuerung zum Auswählen eines oder mehrerer Frequenzteilkanäle für eine Kommunikation zwischen dem Sender und dem Empfänger durch ein Zuweisen eines Frequenzteilkanals für die Kommunikation,

wobei die Steuerung implementiert ist, um einen Frequenzteilkanal zuzuweisen, der für eine Kommunikation zwischen dem Sender und dem Empfänger in einem vorhergehenden Kommunikationsintervall verwendet wurde, falls das Belegtsignal, das von dem Frequenzteilkanal empfangen wird, gleich oder größer als eine erste vorbestimmte Schwelle ist,
und
wobei die Steuerung implementiert ist, um einen Frequenzteilkanal zuzuweisen, der für eine Kommunikation zwischen dem Sender und dem Empfänger in einem vorhergehenden Kommunikationsintervall verwendet wurde, falls das Belegtsignal, das von dem Frequenzteilkanal empfangen wird, gleich oder kleiner als eine zweite vorbestimmte Schwelle ist.

13. Ein Empfänger für eine Kommunikation mit einem Sender, der für eine dynamische Frequenzteilkanalzuweisung in einem Kommunikationssystem wirksam ist, das einen Kommunikationskanal mit einer Mehrzahl von Frequenzteilkanälen aufweist, wobei der Empfänger folgende Merkmale aufweist:

eine Einrichtung zum Empfangen von Signalen über einen Frequenzteilkanal, der für eine Kommunikation durch den Sender zugewiesen ist;
eine Einrichtung zum Erzeugen eines Belegtsignals auf dem Frequenzteilkanal, der für eine Kommunikation durch den Sender zugewiesen ist, falls der SINR-Wert (SINR = Signal-to-Interference+Noise = Signal-zu-Rausch+Störung) der Signale, die über diesen zugewiesenen Frequenzteilkanal empfangen werden, gleich oder größer als eine vorbestimmte Schwelle ist und der Sender angegeben hat, dass mehr Daten vorhanden sind, die gesendet werden sollen, wobei die Entscheidung, ob das Belegtsignal rundgesendet werden soll, auf einer Pro-Frequenzteilkanal-Basis vorgenommen wird.

14. Ein Empfänger gemäß Anspruch 13, bei dem die Schwelle basierend auf der Dienstklasse oder Dienstgüte angepasst ist, die für die Kommunikation erforderlich ist.

15. Ein System für eine Kommunikation, das folgende Merkmale aufweist:

einen Sender gemäß Anspruch 12 und
einen Empfänger gemäß Anspruch 13.

## Revendications

1. Procédé d'attribution dynamique de sous-canaux de fréquence pour la communication entre un émetteur et un récepteur dans un système de communication comprenant un canal de communication présentant une pluralité de sous-canaux de fréquence, le procédé comprenant:

recevoir à l'émetteur, de la pluralité de sous-canaux de fréquence, des signaux occupé respectifs, chaque signal occupé étant indicatif d'une communication sur le sous-canal de fréquence respectif dans le système de communication; et
sélectionner un ou plusieurs sous-canaux de fréquence (S3, S10) pour une communication entre l'émetteur et le récepteur en attribuant un sous-canal de fréquence (S4, S11) pour la communication,

dans lequel l'étape consistant à sélectionner comprend le fait d'attribuer un sous-canal de fréquence qui a été utilisé pour une communication entre l'émetteur et le récepteur dans un intervalle de communication précédent au cas où le signal occupé reçu du sous-canal de fréquence est égal ou supérieur à un premier seuil prédéterminé,
et
dans lequel l'étape consistant à sélectionner comprend le fait d'attribuer un sous-canal de fréquence qui n'était pas utilisé pour une communication entre l'émetteur et le récepteur dans un intervalle de communication précédent au cas ou le signal occupé reçu du sous-canal de fréquence est égal ou inférieur à un deuxième seuil prédéterminé.

2. Procédé selon la revendication 1, comprenant par ailleurs l'étape suivante pour initialiser (610) une communication entre l'émetteur et le récepteur,

   recevoir à l'émetteur de la pluralité de sous-canaux de fréquence respectifs des signaux occupé, chaque signal occupé étant indicatif d'une communication sur le sous-canal de fréquence respectif dans le système de communication; et

   sélectionner un ou plusieurs sous-canaux de fréquence (S3) pour une communication entre l'émetteur et le récepteur en attribuant (S4) un sous-canal de fréquence pour la communication au cas où le signal occupé reçu du sous-canal de fréquence est égal ou inférieur à un troisième seuil prédéterminé.

3. Procédé selon les revendications 1 ou 2, dans lequel l'étape consistant à sélectionner un ou plusieurs sous-canaux de fréquence se base sur la comparaison d'une valeur d'énergie du signal occupé avec un seuil.

4. Procédé selon la revendication 3, dans lequel la valeur d'énergie du signal occupé est de l'ordre de 20 dBm à 50 dBm au point d'émission et le premier, le deuxième et un troisième seuil prédéterminé d'une valeur d'énergie du signal occupé sont égaux et de l'ordre de -80 dBm et de - 120 dBm.

5. Procédé selon l'une des revendications 1 à 4, dans lequel le récepteur génère le signal occupé (S9) sur un sous-canal de fréquence attribué pour la communication par l'émetteur au cas où les signaux reçus via le sous-canal de fréquence attribué au récepteur sont égaux ou supérieur à un quatrième seuil (S7, S8).

6. Procédé selon la revendication 5, dans lequel le récepteur génère le signal occupé (S9) sur un sous-canal de fréquence attribué pour la communication par l'émetteur au cas où la valeur de SINR (signal-interférence + bruit) des signaux reçus via le sous-canal de fréquence attribué au récepteur sont égaux ou supérieurs au quatrième seuil.

7. Procédé selon les revendications 5 ou 6, dans lequel le quatrième seuil est adapté sur base de la classe de service ou de la qualité de service requise pour la communication.

8. Procédé selon l'une des revendications 1 à 7, dans lequel le système de communication se base sur OFDM/TDD (Multiplexage par Division de Fréquence Orthogonale / Duplexage par Division de Temps).

9. Procédé selon la revendication 8, dans lequel le signal occupé des sous-canaux de fréquence respectifs est transmis à un canal multiplexé par division de temps spécifique du sous-canal.

10. Procédé selon la revendication 8 ou 9, dans lequel le signal occupé des sous-canaux de fréquence respectifs est transmis comme symbole OFDM particulier.

11. Programme d'ordinateur présentant un code de programme pour réaliser, lorsqu'il est exécuté sur un ordinateur, les étapes d'un procédé selon l'une quelconque des revendications 1 à 10.

12. Emetteur pour l'attribution dynamique de sous-canaux de fréquence pour la communication avec un récepteur dans un système de communication comprenant un canal de communication présentant une pluralité de sous-canaux de fréquence, l'émetteur comprenant:

    un moyen destiné à recevoir, de la pluralité de sous-canaux de fréquence, des signaux occupé respectifs, chaque signal occupé étant indicatif d'une communication sur le sous-canal de fréquence respectif dans le système de communication; et

    un contrôleur destiné à sélectionner un ou plusieurs sous-canaux de fréquence pour une communication entre l'émetteur et le récepteur en attribuant un sous-canal de fréquence pour la communication,

    dans lequel le contrôleur est mis en oeuvre pour attribuer un sous-canal de fréquence qui a été utilisé pour une communication entre l'émetteur et le récepteur dans un intervalle de communication précédent au cas où le signal occupé reçu du sous-canal de fréquence est égal ou supérieur à un premier seuil prédéterminé, et

    dans lequel le contrôleur est mis en oeuvre pour attribuer un sous-canal de fréquence qui a été utilisé pour une communication entre l'émetteur et le récepteur dans un intervalle de communication précédent au cas où le signal occupé reçu du sous-canal de fréquence est égal ou inférieur à un deuxième seuil prédéterminé.

13. Récepteur pour la communication avec un émetteur opérationnel pour l'attribution dynamique de sous-canaux de fréquence dans un système de communication comprenant un canal de communication présentant une pluralité de sous-canaux de fréquence, le récepteur comprenant:

un moyen destiné à recevoir des signaux via un sous-canal de fréquence attribué pour la communication par l'émetteur;

un moyen destiné à générer un signal occupé sur le sous-canal de fréquence attribué pour la communication par l'émetteur au cas où la valeur de SINR (signal-interférence + bruit) des signaux reçus via ce sous-canal de fréquence attribué est égale ou supérieure à un seuil prédéterminé et que l'émetteur a indiqué qu'il y a encore d'autres données à envoyer, où la décision de s'il y a lieu de diffuser le signal occupé est effectuée par sous-signal de fréquence.

14. Récepteur selon la revendication 13, dans lequel le seuil est adapté sur base de la classe de service ou de la qualité de service requise pour la communication.

15. Système de communication, comprenant:

un émetteur selon la revendication 12, et
un récepteur selon la revendication 13.

Intended link

Interference link

Potential victim receiver boadcasting busy tone

# FIGURE 1A

Received busy tone at potential transmitter MS$^{TX}$

Threshold

#n      #p      $f$

# FIGURE 1B

FIGURE 2

FIGURE 3A

Received busy tone power at $MS_2^{Tx}$

FIGURE 3B

FIGURE 4

FIGURE 5

EP 1 763 268 B1

FIGURE 6

|H(f,t)|

frequency

time

FIGURE 7A

|H(f,t)|

frequency

time

FIGURE 7B

$|H'(f,t)|$

frequency

time

FIGURE 7C

FIGURE 8A

The threshold $I_{thr} = -80$ dBm

Average thoughput (bits/ OFDM symbol)

Average offered Load (bits/ OFDM symbol)

- ◦— Decentralised dynamicsub-channel allocation
- *— Centralised non-dynamicsub-channel allocation

FIGURE 8B

EP 1 763 268 B1

FIGURE 8C

EP 1 763 268 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2004011840 W
- WO 2005041494 A
- EP 1526685 A

**Non-patent literature cited in the description**

- **P. Omiyi ; H. Haas.** Improving Time-Slot Allocation in 4th Generation OFDM/TDMA TDD Radio Access Networks with Innovative Channel-Sensing. *Proceedings of the International Conference on Communications ICC '04,* 20 June 2004, vol. 6, 3133-3137
- **OMIYI P et al.** Improving time-slot allocation in 4th generation OFDM/TDMA TDD radio networks with innovative channel-sensing. *COMMUNICATIONS, 2004 IEEE INTERNATIONAL CONFERENCE ON PARIS,* 20 June 2004, ISBN 0-7803-8533-0, 3133-3137
- **OMIYI P E et al.** Maximising spectral efficiency in 4th generation OFDM/TDMA TDD hybrid cellular mobile/ad-hoc wireless communications. *VEHICULAR TECHNOLOGY CONFERENCE, 2004. VTC 2004-SPRING. 2004, IEEE MILAN,* 17 May 2004, vol. 4, ISBN 0-7803-8255-2, 2052-2056
- Maximising Spectral Efficiency in 3G with Hybrid Ad-Hoc UTRA TDD/UTRA FDD Cellular Mobile Communications. *SPREAD SPECTRUM TECHNIQUES AND APPLICATIONS, 2004 IEEE EIGHTH INTERNATIONAL SYMPOSIUM ON SYDNEY,* 30 August 2004, ISBN 0-7803-9408-3, 613-617